(19) 

**Europäisches Patentamt**

**European Patent Office**

**Office européen des brevets**

(11) **EP 4 556 292 A1**

(12) **EUROPEAN PATENT APPLICATION**

(43) Date of publication:
**21.05.2025 Bulletin 2025/21**

(51) International Patent Classification (IPC):
**B60L 3/12** (2006.01)     **B60L 15/20** (2006.01)
**B60L 58/12** (2019.01)     **B60W 30/188** (2012.01)

(21) Application number: **24211275.3**

(22) Date of filing: **06.11.2024**

(52) Cooperative Patent Classification (CPC):
**B60L 3/12; B60L 15/20; B60L 15/2054;**
**B60L 58/12; B60W 30/188;** B60L 2210/40;
B60L 2240/12; B60L 2240/16; B60L 2240/421;
B60L 2240/423; B60L 2240/461; B60L 2240/486;
B60L 2240/545; B60L 2240/80; B60L 2250/24;
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **07.11.2023 JP 2023190314**

(71) Applicant: **TOYOTA JIDOSHA KABUSHIKI**
**KAISHA**
**Aichi-ken, 471-8571 (JP)**

(72) Inventors:
• **FUJII, Kazuki**
**TOYOTA-SHI, AICHI-KEN, 471-8571 (JP)**
• **HAREYAMA, Yohei**
**TOYOTA-SHI, AICHI-KEN, 471-8571 (JP)**
• **HAYASAKA, Masato**
**TOYOTA-SHI, AICHI-KEN, 471-8571 (JP)**
• **KANEKO, Satoshi**
**TOYOTA-SHI, AICHI-KEN, 471-8571 (JP)**

• **KAKO, Junichi**
**TOYOTA-SHI, AICHI-KEN, 471-8571 (JP)**
• **ASAI, Hideo**
**TOYOTA-SHI, AICHI-KEN, 471-8571 (JP)**
• **ASAHARA, Norimi**
**TOYOTA-SHI, AICHI-KEN, 471-8571 (JP)**
• **SHIRATORI, Shinya**
**TOYOTA-SHI, AICHI-KEN, 471-8571 (JP)**
• **SATO, Kotoru**
**TOYOTA-SHI, AICHI-KEN, 471-8571 (JP)**
• **OTA, Atsuharu**
**TOYOTA-SHI, AICHI-KEN, 471-8571 (JP)**
• **TAKAHASHI, Motoki**
**TOYOTA-SHI, AICHI-KEN, 471-8571 (JP)**
• **OSHIUMI, Yasuhiro**
**TOYOTA-SHI, AICHI-KEN, 471-8571 (JP)**
• **NOGAWA, Shinichiro**
**TOYOTA-SHI, AICHI-KEN, 471-8571 (JP)**
• **TAKADA, Norifumi**
**TOYOTA-SHI, AICHI-KEN, 471-8571 (JP)**

(74) Representative: **Cabinet Beau de Loménie**
**158, rue de l'Université**
**75340 Paris Cedex 07 (FR)**

(54) **BATTERY ELECTRIC VEHICLE**

(57)     A battery electric vehicle (100) includes a driving operation member for driving the vehicle (100), a processing circuit (102), and a memory (103) storing a database that manages vehicle models (200) obtained by modelling virtual vehicles among which acceleration characteristics for a driver's driving operation vary. The processing circuit (102) is configured to read, from the database, a vehicle model (200) of an intended virtual vehicle selected from among the virtual vehicles by the driver, acquire an operating status of the driving operation member and a driving condition of the battery electric vehicle (100), calculate a virtual acceleration of the intended virtual vehicle for an operation to the driving operation member based on the operating status of the driving operation member and the driving condition of the battery electric vehicle (100) by using the vehicle model (200) of the intended virtual vehicle, and control the electric motor (2) such that an acceleration of the battery electric vehicle (100) becomes the virtual acceleration.

FIG. 3

**(Cont. next page)**

(52) Cooperative Patent Classification (CPC): (Cont.)
B60L 2250/26; B60L 2260/30; B60L 2260/44;
B60L 2270/145

**Description**

BACKGROUND OF THE INVENTION

1. Field of the Invention

The disclosure relates to a battery electric vehicle including an electric motor as a driving source.

2. Description of Related Art

A technology to reproduce various driving feels in a battery electric vehicle by controlling a motor torque of an electric motor has been considered. For example, Japanese Unexamined Patent Application Publication No. 2018-166386 (JP 2018-166386 A) describes a technology for a battery electric vehicle to simulate and reproduce, through control of motor torque, a torque change at the time of a shift change in a vehicle including a step transmission is disclosed.

SUMMARY OF THE INVENTION

An acceleration feel of a vehicle resulting from a driving operation is one of elements featuring a driving feel of the vehicle. An acceleration feel of a vehicle is an important point for a driver to enjoy driving the vehicle. Particularly, a preference of an acceleration feel of a vehicle presumably varies among drivers. A driver presumably wants to enjoy acceleration feels of various vehicles according to feelings. However, a driver is able to enjoy only a single acceleration feel with a single vehicle.
Improving acceleration feel of the vehicle makes it possible for a driver to have increased awareness of the behavior of the vehicle, thereby allowing more precise control of driving the vehicle, improving safety and energy-efficiency of driving the vehicle.
The disclosure provides a battery electric vehicle that allows a driver to enjoy acceleration feels of various vehicles.
An aspect of the disclosure relates to a battery electric vehicle including an electric motor as a driving source. The battery electric vehicle includes a driving operation member used to drive the battery electric vehicle, a processing circuit, and a memory storing a database that manages a plurality of vehicle models obtained by modelling a plurality of virtual vehicles among which acceleration characteristics for a driving operation of a driver vary. The processing circuit is configured to read, from the database, a vehicle model of an intended virtual vehicle selected from among the plurality of virtual vehicles by the driver, acquire an operating status of the driving operation member and a driving condition of the battery electric vehicle, calculate a virtual acceleration of the intended virtual vehicle for an operation to the driving operation member based on the operating status of the driving operation member and the driving condition of the battery electric vehicle by using the vehicle model of the intended virtual vehicle, and control the electric motor such that an acceleration of the battery electric vehicle becomes the virtual acceleration.
With the battery electric vehicle according to the disclosure, a virtual acceleration of an intended virtual vehicle is calculated by using a vehicle model of the intended virtual vehicle selected from among a plurality of virtual vehicles by a driver. Then, the electric motor is controlled such that the acceleration of the battery electric vehicle becomes the calculated virtual acceleration. Thus, it is possible to impart the driver with an acceleration feel as if the driver is driving the intended virtual vehicle in the battery electric vehicle. By extension, the driver is able to enjoy acceleration feels of various vehicles.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram that shows the configuration of a battery electric vehicle according to an embodiment of the disclosure;
FIG. 2 is a tree diagram that shows an example of selecting a control mode associated with a controller by a driver;
FIG. 3 is a diagram that shows the functional configuration of the controller that functions as a motor controller;
FIG. 4 is a diagram for illustrating an example of a process in a vehicle model; and
FIG. 5 is a diagram that shows the functional configuration of the controller that functions as a sound controller.

DETAILED DESCRIPTION OF EMBODIMENTS

Hereinafter, an embodiment of the disclosure will be described with reference to the accompanying drawings.

1 Configuration of Power System of Battery Electric Vehicle

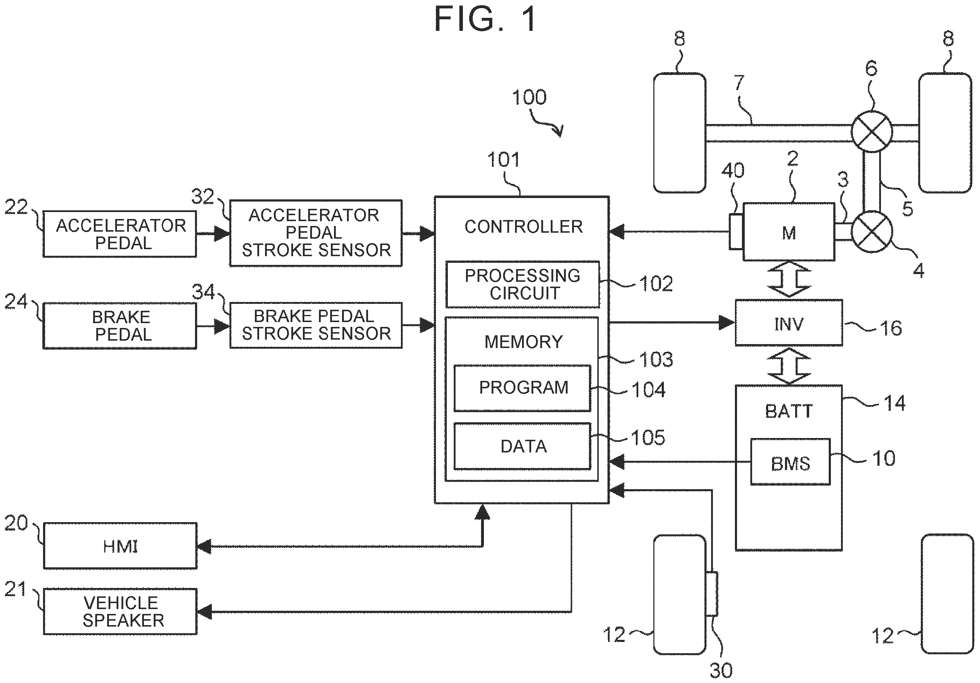

FIG. 1 is a diagram that schematically shows the configuration of a battery electric vehicle 100 according to the embodiment of the disclosure. Initially, the configuration of the power system of the battery electric vehicle 100 will be described with reference to FIG. 1.

The battery electric vehicle 100 includes an electric motor (M) 2 as a driving power source. The electric motor 2 is, for example, a three-phase alternating-current motor. An output shaft 3 of the electric motor 2 is connected to one end of a propeller shaft 5 via a gear mechanism 4. The other end of the propeller shaft 5 is connected to a vehicle front drive shaft 7 via a differential gear 6.

The battery electric vehicle 100 includes drive wheels 8 that are front wheels and driven wheels 12 that are rear wheels. The drive wheels 8 are respectively provided at both ends of the drive shaft 7.

The battery electric vehicle 100 includes a battery (BATT) 14 and an inverter (INV) 16. The battery 14 stores electric energy for driving the electric motor 2. In other words, the battery electric vehicle 100 is a battery electric vehicle (BEV) that drives on electric energy stored in the battery 14. The inverter 16 is, for example, a voltage inverter and controls the torque of the electric motor 2 with PWM control.

2 Configuration of Control System of Battery Electric Vehicle

Subsequently, the configuration of a control system of the battery electric vehicle 100 will be described with reference to FIG. 1.

The battery electric vehicle 100 includes a battery management system (BMS) 10. The battery management system 10 monitors the cell voltage, current, temperature, and the like of the battery 14. The battery management system 10 has a function to estimate the state of charge (SOC) of the battery 14.

The battery electric vehicle 100 includes a vehicle speed sensor 30. At least one of wheel speed sensors (not shown) respectively provided at the right and left front wheels 8 and the right and left rear wheels 12 is used as the vehicle speed sensor 30. The battery electric vehicle 100 includes an accelerator pedal stroke sensor 32. The accelerator pedal stroke sensor 32 is provided at an accelerator pedal 22. The accelerator pedal stroke sensor 32 outputs a signal indicating an operation amount of the accelerator pedal 22, that is, an accelerator operation amount. The battery electric vehicle 100 further includes a brake pedal stroke sensor 34. The brake pedal stroke sensor 34 is provided at a brake pedal 24. The brake pedal stroke sensor 34 outputs a signal indicating an operation amount of the brake pedal 24, that is, a brake operation amount. The accelerator pedal 22 and the brake pedal 24 serve as a driving operation member used to drive the battery electric vehicle 100. The battery electric vehicle 100 includes a rotation speed sensor 40. The rotation speed sensor 40 is provided at the electric motor 2. The rotation speed sensor 40 outputs a signal indicating a rotation speed of the electric motor 2.

The battery electric vehicle 100 includes a human machine interface (HMI) 20 and a vehicle speaker 21. The human machine interface 20 serves as an interface with a driver. The HMI 20 provides information to the driver and receives input from the driver. The HMI 20 includes, for example, a touch panel display. In this case, the HMI 20 displays information on the touch panel display and receives input from the driver through touch operation to the touch panel display. Other than the above, the HMI 20 may be made up of a meter display, a steering wheel switch, and the like. The vehicle speaker 21 is a sound generator that artificially generates a sound in a vehicle cabin and provides information to the driver. The vehicle speaker 21 is further capable of outputting an artificial engine sound (described later).

The battery electric vehicle 100 includes a controller 101. Sensors and devices to be controlled, mounted on the battery electric vehicle 100, are connected to the controller 101 by an in-vehicle network, such as a controller area network (CAN). Other than the battery management system 10, the vehicle speed sensor 30, the accelerator pedal stroke sensor 32, the brake pedal stroke sensor 34, and the rotation speed sensor 40, various sensors are mounted on the battery electric vehicle 100.

The controller 101 is typically an electronic control unit (ECU). The controller 101 may be a combination of a plurality of ECUs. The controller 101 includes at least a processing circuit 102 and a memory 103. The memory 103 includes a RAM that temporarily records data and a ROM that saves a program 104 executable on the processing circuit 102 and various pieces of data 105 relevant to the program 104. The program 104 is composed of a plurality of instructions. The processing circuit 102 reads the program 104 and the data 105 from the memory 103 and runs the program 104, and generates a control signal based on signals acquired from the sensors.

The processing circuit 102 may be implemented so as to include at least one of a general-purpose processor, an application specific processor, an integrated circuit, application specific integrated circuits (ASICs), a central processing unit (CPU), a conventional circuit, and combinations of them. The processing circuit 102 is hardware programmed to implement functions that will be described below or hardware that executes functions that will be described below. The processing circuit 102 may include any hardware known as the one programmed to implement functions that will be described below or that executes functions that will be described below.

3 Control Mode

The controller 101 has two control modes, that is, a normal mode and an on-demand mode, in relation to control over the battery electric vehicle 100. The normal mode is a control mode to execute normal control as a BEV. The on-demand mode is a control mode to execute control to receive, from the driver, a virtual vehicle selected from among a plurality of virtual vehicles and to reproduce an intended virtual vehicle of which acceleration characteristics for a driving operation of the driver are selected. In other words, in the on-demand mode, the controller 101 controls the battery electric vehicle 100 such that the driver is able to obtain an acceleration feel as if the driver is driving the intended virtual vehicle. The plurality of virtual vehicles associated with the on-demand mode are assumed as various vehicles of which the acceleration characteristics are different from each other. Particularly, each of the virtual vehicles may be assumed as a real vehicle or may be assumed as a vehicle actually not existing. Generally, a difference in acceleration characteristics is due to a difference in the configuration of a powertrain from a driving source to drive wheels or a difference in a control method of the powertrain. Therefore, the plurality of virtual vehicles may be regarded as being different from each other in at least part of the configuration or the control method relevant to the powertrain.

A control mode may be configured to be selected by the driver through an operation to the HMI 20. For example, the driver selects a control mode by performing touch operation to the touch panel display of the HMI 20.

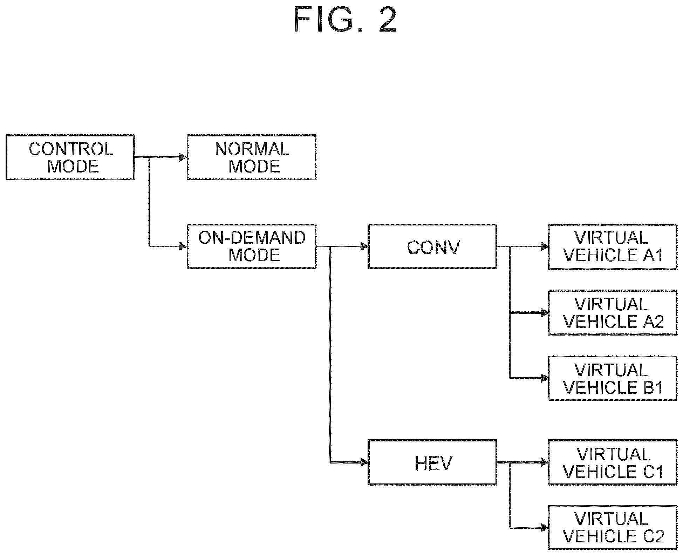

FIG. 2 is a tree diagram that shows an example of selecting a control mode by the driver. For example, the touch panel display of the HMI 20 displays a select screen for the driver as follows in accordance with the tree shown in FIG. 2.

An initial screen of the touch panel display shows a choice "CONTROL MODE". Once the choice "CONTROL MODE" is selected, the touch panel display subsequently shows a choice "NORMAL MODE" and a choice "ON-DEMAND MODE". When the choice "NORMAL MODE" is selected, the control mode of the battery electric vehicle 100 switches to the normal mode. The HMI 20 transmits a signal to the controller 101 such that the control mode is set to the normal mode. When the choice "ON-DEMAND MODE" is selected, the control mode of the battery electric vehicle 100 switches to the on-demand mode. The HMI 20 transmits a signal to the controller 101 such that the control mode is set to the on-demand mode.

When the choice "ON-DEMAND MODE" is selected, the touch panel display further shows a choice "CONV" and a choice "HEV" as classes of selectable virtual vehicles. CONV is a class indicating a conventional internal combustion engine vehicle (conventional vehicle). HEV is a class indicating a hybrid electric vehicle. Once the choice "CONV" is selected, the touch panel display subsequently shows a choice "VIRTUAL VEHICLE A1", a choice "VIRTUAL VEHICLE A2", and a choice "VIRTUAL VEHICLE B 1". A virtual vehicle A1, a virtual vehicle A2, and a virtual vehicle B1 are selectable virtual vehicles classified to CONV. Similarly, once the choice "HEV" is selected, the touch panel display subsequently shows a choice "VIRTUAL VEHICLE C1" AND a choice "VIRTUAL VEHICLE C2". A virtual vehicle C1 and a virtual vehicle C2 are selectable virtual vehicles classified to HEV. The name of the virtual vehicle shown at each of the choices may be a more specific name, such as a vehicle type and a product name, that the driver easily calls up an image of the virtual vehicle. Once any one of these choices is selected, a corresponding one of the virtual vehicles becomes an intended virtual vehicle. When, for example, the choice "VIRTUAL VEHICLE A2" is selected, the virtual vehicle A2 becomes an intended virtual vehicle. The HMI 20 transmits, to the controller 101, a signal indicating the selected intended virtual vehicle.

In the above description, the classes of selectable virtual vehicles are one example, and how to show choices of classes may be modified as needed. For example, according to selectable virtual vehicles, a choice indicating a plug-in hybrid electric vehicle or a fuel cell electric vehicle may be added. For example, choices according to another class, such as a class according to the type of an internal combustion engine mounted (a supercharged straight-four engine, a flat-six engine, a V12 engine, or the like) may be shown. Alternatively, when the choice "ON-DEMAND MODE" is selected, the touch panel display may show choices of selectable virtual vehicles without showing choices of classes.

As described above, the driver is able to select a control mode by operating the HMI 20. The controller 101 controls the battery electric vehicle 100 in accordance with the selected control mode.

The controller 101 functions as a motor controller that generates a control signal for controlling the torque of the electric motor 2 and a sound controller that generates a control signal for outputting an artificial engine sound from the vehicle speaker 21. More specifically, when the processing circuit 102 runs the program 104 stored in the memory 103, the controller 101 functions as at least the motor controller and the sound controller. Hereinafter, each of motor control by the controller 101 (motor controller) and sound control by the controller 101 (sound controller) will be described.

4 Motor Control

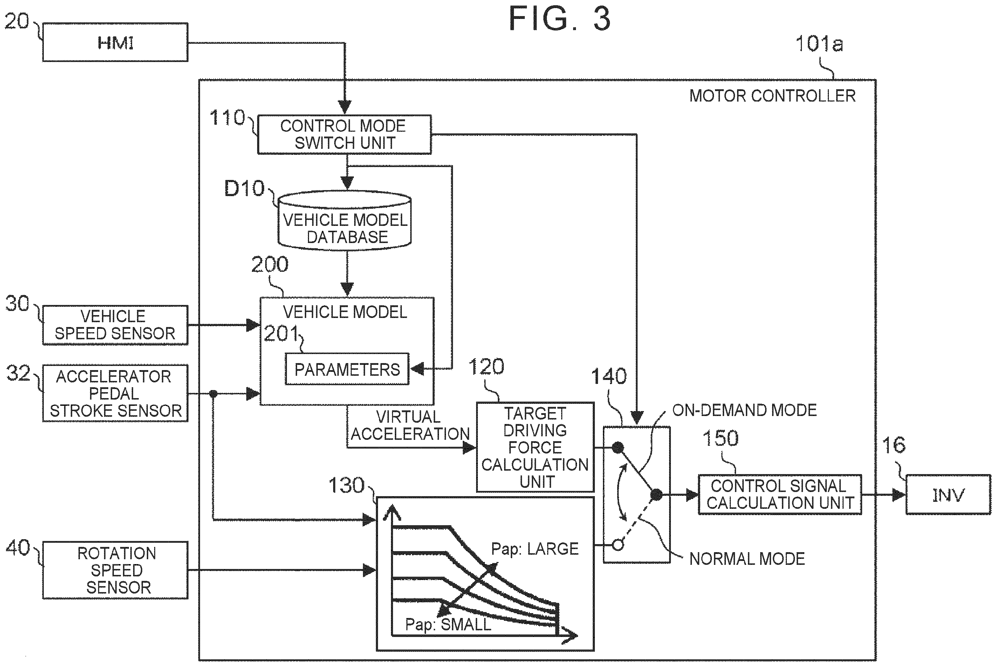

FIG. 3 is a diagram that shows the functional configuration of a motor controller 101a. The motor controller 101a calculates a target driving force of the battery electric vehicle 100 for a driving operation of the driver and generates a control signal for executing PWM control over the inverter 16 based on the target driving force.

As shown in FIG. 3, the motor controller 101a includes a control mode switch unit 110, a target driving force calculation unit 120, a motor torque command map 130, a change-over switch 140, a control signal calculation unit 150, a vehicle model 200, and a vehicle model database D10. Signals from the HMI 20, the vehicle speed sensor 30, the accelerator pedal stroke sensor 32, and the rotation speed sensor 40 are input to the motor controller 101a. The motor controller 101a processes these signals and calculates a target driving force of the battery electric vehicle 100.

A control mode signal from the HMI 20 is input to the control mode switch unit 110. The control mode signal contains information on the control mode selected by the driver. The control mode switch unit 110 acquires, from the control mode signal, the control mode selected by the driver. The control mode switch unit 110 actuates the change-over switch 140 in accordance with whether the selected control mode is the on-demand mode or the normal mode. The change-over switch 140 switches a target driving force to be calculated. In other words, a target driving force to be calculated in the motor controller 101a varies depending on the control mode. Hereinafter, for each of the on-demand mode and the normal mode, calculation of a target driving force in the motor controller 101a will be described.

4.1 On-Demand Mode

When the control mode is the on-demand mode, the motor controller 101a calculates a target driving force by using the vehicle model 200 and the target driving force calculation unit 120. The vehicle model 200 is read from the vehicle model database D10 by the control mode switch unit 110.

The vehicle model database D10 is a database that manages a plurality of vehicle models obtained by modelling the plurality of virtual vehicles. The vehicle model database D10 may be stored in the memory 103. Each of the vehicle models simulates acceleration characteristics that should be achieved by a driving operation of the driver if the battery electric vehicle 100 is a corresponding one of the virtual vehicles. The vehicle model database D10 may occasionally download a new vehicle model for adding a selectable virtual vehicle.

Acceleration characteristics of a vehicle for a driving operation of the driver can be expressed by how a driving force output by the powertrain of the vehicle acts on a virtual vehicle as a result of input of the driving operation. Therefore, in each of the vehicle models, at least the powertrain from the driving source to the drive wheels of a corresponding one of the virtual vehicles is modelled. For each of the vehicle models, to calculate an action on a corresponding one of the virtual vehicles, a resistance force that is generated in the virtual vehicle according to a driving environment and a dynamic property (for example, vehicle weight) of a vehicle body of the virtual vehicle are modelled.

Each of the vehicle models has variable parameters relevant to acceleration characteristics. Examples of the parameters include vehicle weight, tire diameter, speed ratios, maximum engine torque, engine torque response, and shift timing.

When the control mode is the on-demand mode, the control mode switch unit 110 further acquires information on the intended virtual vehicle from the control mode signal from the HMI 20. The control mode switch unit 110 reads the vehicle model of the intended virtual vehicle by consulting the vehicle model database D10. The read vehicle model is the vehicle model 200 used to calculate a target driving force. In other words, the vehicle model 200 is the vehicle model of the intended virtual vehicle. The control mode switch unit 110 sets parameters 201 of the vehicle model 200 according to the intended virtual vehicle. The acceleration characteristics associated with the intended virtual vehicle are expressed by the vehicle model 200 according to a combination of the vehicle model 200 and the parameters 201. For example, the control mode switch unit 110 reads the vehicle model 200 and sets the parameters 201 as shown in the following table according to the intended virtual vehicle selected by the driver. As will be described below, the same vehicle model may be read for different intended virtual vehicles. This is, for example, a case where the type of powertrain is the same, the model is common, and each of the intended virtual vehicles can be expressed by changing the parameters 201.

Table 1

| Intended Virtual Vehicle | Vehicle Model | Parameter Setting |
|---|---|---|
| Virtual Vehicle A1 | Vehicle Model A | Parameter A1 |
| Virtual Vehicle A2 | Vehicle Model A | Parameter A2 |
| Virtual Vehicle B1 | Vehicle Model B | Parameter B1 |
| Virtual Vehicle C1 | Vehicle Model C | Parameter C1 |

(continued)

| Intended Virtual Vehicle | Vehicle Model | Parameter Setting |
|---|---|---|
| Virtual Vehicle C2 | Vehicle Model C | Parameter C2 |

The motor controller 101a calculates a virtual acceleration of the intended virtual vehicle for an operation to the driving operation member of the battery electric vehicle 100 by using the vehicle model 200 read in this way. At least a vehicle speed detected by the vehicle speed sensor 30 and an accelerator operation amount detected by the accelerator pedal stroke sensor 32 are input to the vehicle model 200. A vehicle speed is one of driving conditions of the battery electric vehicle 100. An accelerator operation amount is one of operating statuses of the driving operation member of the battery electric vehicle 100. A signal from another sensor, such as information on a driving environment, may be input to the vehicle model 200 according to the configuration of the model. The vehicle model 200 is configured to, upon receiving input of these, calculate a virtual acceleration of the intended virtual vehicle.

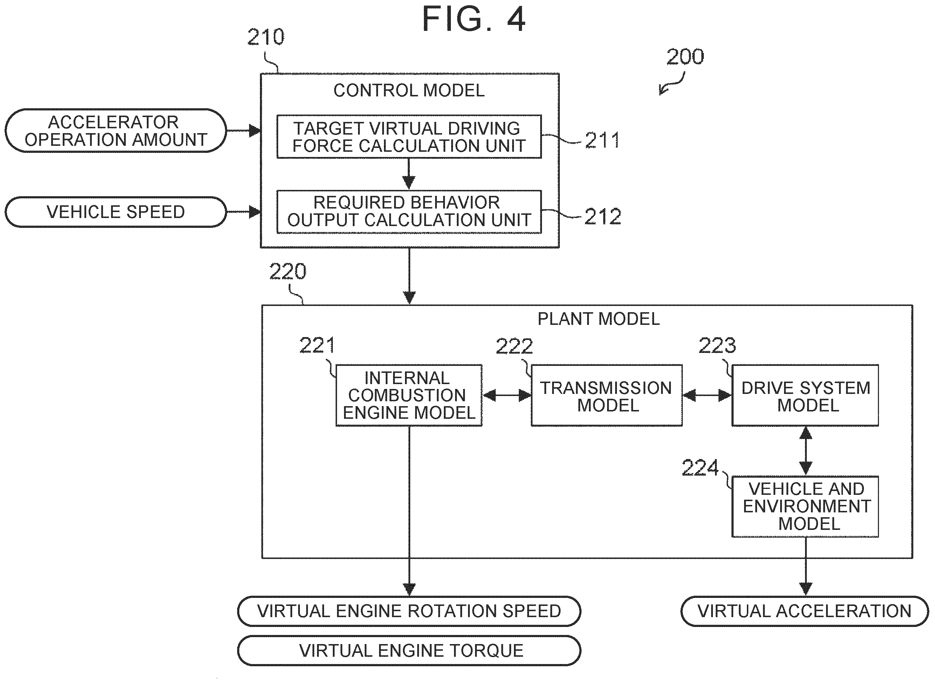

An example of a process in the vehicle model 200 will be described with reference to FIG. 4. The vehicle model 200 includes a control model 210 that simulates a control system that calculates a required behavior output of the powertrain of the intended virtual vehicle and a plant model 220 that simulates a physical limitation on the required behavior output of the powertrain. The control model 210 and the plant model 220 are assumed to have different specifications for each type of the powertrain. For example, between CONV and HEV, both the control model 210 and the plant model 220 are respectively different. The configurations of the control model 210 and the plant model 220 shown in FIG. 4 show examples of a case where the intended virtual vehicle is an automatic transmission vehicle (AT vehicle) including an internal combustion engine.

The control model 210 includes a target virtual driving force calculation unit 211 and a required behavior output calculation unit 212. The target virtual driving force calculation unit 211 calculates a target value of virtual driving force (target virtual driving force) output from the powertrain of the intended virtual vehicle. For example, the target virtual driving force calculation unit 211 calculates a target virtual driving force by using a map that gives a target virtual driving force for a combination of an accelerator operation amount and a vehicle speed. The required behavior output calculation unit 212 calculates a required behavior output of the powertrain such that the target virtual driving force is satisfied. Examples of the required behavior output to be calculated include a target engine torque of the internal combustion engine and a target shift stage of a transmission.

The plant model 220 includes an internal combustion engine model 221, a transmission model 222, a drive system model 223, and a vehicle and environment model 224.

The internal combustion engine model 221 is a model of the internal combustion engine of the intended virtual vehicle. The internal combustion engine model 221, for example, simulates the behavior of the internal combustion engine for input of a target engine torque. The internal combustion engine model 221 outputs a virtual engine rotation speed and a virtual engine torque. Examples of parameters that can be changed according to the intended virtual vehicle in the internal combustion engine model 221 include maximum engine torque and engine torque response.

The transmission model 222 is a model of the transmission of the intended virtual vehicle. The transmission model 222, for example, simulates the behavior of the transmission for input of a target shift stage. The transmission model 222 outputs a virtual transmission output torque in accordance with a virtual engine torque output from the internal combustion engine model 221 and a speed ratio determined by a virtual shift stage. The transmission model 222 includes a step transmission model that simulates a step transmission and a continuously variable transmission model that simulates a continuously variable transmission. Any one of the step transmission model and the continuously variable transmission model is selected according to the intended virtual vehicle. Examples of parameters that can be changed according to the intended virtual vehicle in the transmission model 222 include speed ratios and shift timing. In the case of the step transmission model, the speed ratio means the gear ratio of each gear stage.

The drive system model 223 is a model of the drive system of the intended virtual vehicle. The drive system model 223, for example, models a mechanical structure from the transmission to the drive wheels. The drive system model 223 calculates a drive wheel torque by using a virtual transmission output torque output from the transmission model 222 and a predetermined speed reduction ratio and outputs a virtual driving force of the intended virtual vehicle. Examples of parameters that can be changed according to the intended virtual vehicle in the drive system model 223 include speed reduction ratio and propeller shaft maximum allowable torque.

The vehicle and environment model 224 is a model of the dynamic property of the vehicle body of the intended virtual vehicle and the driving environment of the intended virtual vehicle. The vehicle and environment model 224 calculates a driving resistance on the intended virtual vehicle and calculates a virtual acceleration of the intended virtual vehicle from a virtual driving force output from the drive system model 223 and the dynamic property of the vehicle body of the intended virtual vehicle. Examples of parameters that can be changed according to the intended virtual vehicle in the vehicle and environment model 224 include vehicle weight, tire diameter, and coefficient of drag.

In this way, the motor controller 101a calculates a virtual acceleration of the intended virtual vehicle for an operation to the driving operation member of the battery electric vehicle 100 by using the vehicle model 200.

The vehicle models may be created such that the detailedness of each of the models is different from each other according to an event intended to be emphasized. When, for example, the transmission of the vehicle model is a step transmission and a shock or a response resulting from switching of engaged and released gears and clutches of the transmission at the time of kickdown is intended to be emphasized, the transmission model 222 may be configured to reproduce the inertia of a gear mechanism, such as a planetary and Ravigneaux gear mechanism, and elements of the transmission, a change in a transmission path by engaging and disengaging the clutches, and the like. Conversely, when processing load is intended to be reduced, the transmission model 222 may be simply configured to reproduce only a gear ratio.

FIG. 3 is referred to again. The target driving force calculation unit 120 calculates a target driving force for using the calculated virtual acceleration as input and adjusting the acceleration of the battery electric vehicle 100 to the virtual acceleration. For example, the target driving force calculation unit 120 converts a virtual acceleration a to a target driving force $F_{veh}$ by using the following expression. Here, m is the vehicle weight of the battery electric vehicle 100, and $F_{load}$ is an actual driving resistance on the battery electric vehicle 100. The following expression is a simple inverse model of the battery electric vehicle 100.

$$F_{veh} = m * a - F_{load}$$

When the control mode is the on-demand mode, the target driving force calculated by the target driving force calculation unit 120 is input to the control signal calculation unit 150. The control signal calculation unit 150 generates a control signal to the inverter 16 such that the input target driving force is given to the battery electric vehicle 100. When the inverter 16 operates in accordance with the acquired control signal, motor control in the on-demand mode is achieved.

As described above, in the on-demand mode, the virtual acceleration of the intended virtual vehicle is calculated by using the vehicle model 200 of the intended virtual vehicle selected by the driver. Then, the electric motor 2 is subjected to motor control such that the acceleration of the battery electric vehicle 100 becomes the calculated virtual acceleration. Thus, it is possible to impart the driver with an acceleration feel as if the driver is driving the intended virtual vehicle in the battery electric vehicle 100. By extension, the driver is able to enjoy acceleration feels of various vehicles.

4.2 Normal Mode

When the control mode is the normal mode, the motor controller 101a calculates a target driving force by using the motor torque command map 130.

The motor torque command map 130 is a map for determining a target driving force from an accelerator operation amount and a rotation speed of the electric motor 2. A signal of the accelerator pedal stroke sensor 32 and a signal of the rotation speed sensor 40 are input as the parameters of the motor torque command map 130. A target driving force corresponding to these signals is output from the motor torque command map 130.

When the control mode is the normal mode, the target driving force calculated by the motor torque command map 130 is input to the control signal calculation unit 150. The control signal calculation unit 150 generates a control signal to the inverter 16 such that the input target driving force is given to the battery electric vehicle 100. When the inverter 16 operates in accordance with the acquired control signal, motor control in the normal mode is achieved.

As described above, in the normal mode, the driver is able to drive a BEV through normal driving operation.

5 Sound Control

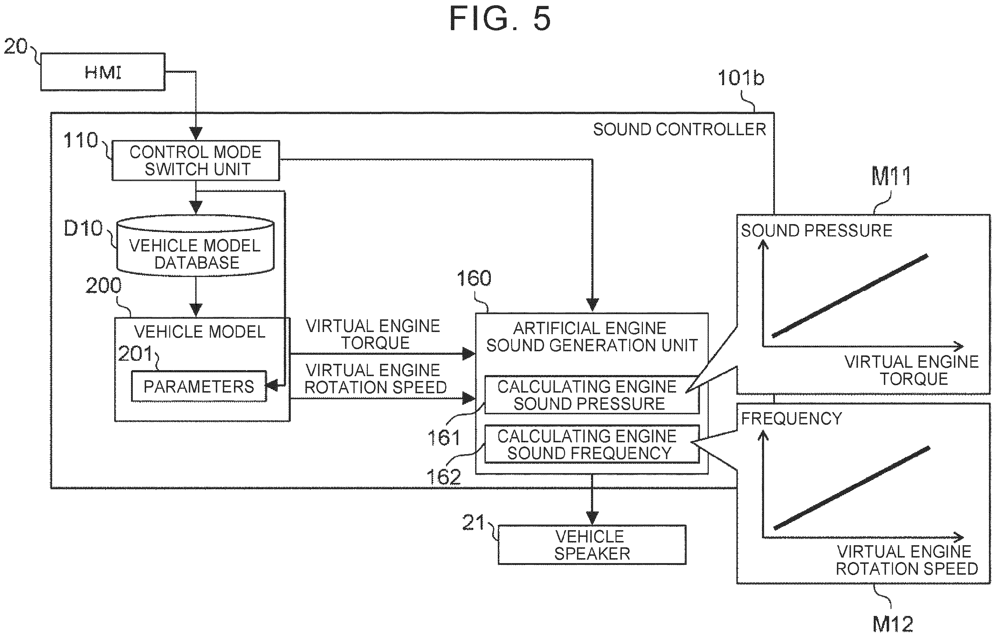

FIG. 5 is a diagram that shows the functional configuration of a sound controller 101b. The sound controller 101b is capable of producing artificially generated sounds from the vehicle speaker 21. One of the artificial sounds is an artificial engine sound that simulates an engine sound in a virtual vehicle equipped with an internal combustion engine.

Similarly to the case of motor control, the control mode switch unit 110 acquires the control mode selected by the driver from the control mode signal from the HMI 20. The control mode switch unit 110 transmits the acquired control mode to an artificial engine sound generation unit 160. When the control mode is the on-demand mode, the control mode switch unit 110 further acquires information on the intended virtual vehicle from the control mode signal. The control mode switch unit 110 transmits information on the intended virtual vehicle to the artificial engine sound generation unit 160.

The artificial engine sound generation unit 160 functions when the control mode is the on-demand mode and the intended virtual vehicle is a virtual vehicle equipped with an internal combustion engine. At this time, the control mode switch unit 110 reads the vehicle model 200 that is the vehicle model of the intended virtual vehicle by consulting the vehicle model database D10 and sets the parameters 201 according to the intended virtual vehicle. Then, the artificial engine sound generation unit 160 generates an artificial engine sound based on a virtual engine torque and a virtual engine rotation speed, calculated by using the vehicle model 200.

The artificial engine sound generation unit 160 acquires a sound source of the artificial engine sound of the internal combustion engine of the intended virtual vehicle by consulting the memory 103. A sound source of an artificial engine sound for each virtual vehicle equipped with an internal combustion engine may be stored in the memory 103.

The artificial engine sound generation unit 160 includes a process 161 of calculating an engine sound pressure and a process 162 of calculating an engine sound frequency. In the process 161, a sound pressure of the artificial engine sound is calculated from a virtual engine torque by using a sound pressure map M11. The sound pressure map M11 is created such that, as the virtual engine torque increases, the sound pressure also increases. In the process 162, a frequency of the artificial engine sound is calculated from a virtual engine rotation speed by using a frequency map M12. The frequency map M12 is created such that, as the virtual engine rotation speed increases, the frequency also increases. The virtual engine torque and the virtual engine rotation speed vary in accordance with an operation to the driving operation member by the driver.

The sound controller 101b outputs the artificial engine sound generated by the artificial engine sound generation unit 160 from the vehicle speaker 21. In this way, when sound control associated with an artificial engine sound is executed by the sound controller 101b, such a reality that the driver is driving the intended virtual vehicle can be further imparted to the driver when the control mode is the on-demand mode.

6 Display Control

When the control mode is the on-demand mode, the controller 101 may be configured to execute display control to cause the HMI 20 to show a virtual engine rotation speed and/or a virtual shift stage of the intended virtual vehicle. Thus, such a reality that the driver is driving the intended virtual vehicle can be further imparted to the driver.

7 Others

The battery electric vehicle 100 according to the embodiment is an FF vehicle that drives the front wheels with the single electric motor 2. The technical features according to the present embodiment are also applicable to a battery electric vehicle in which two electric motors are respectively disposed at the front and the rear sides and respectively drive the front wheels and the rear wheels. The technical features according to the present embodiment are also applicable to a battery electric vehicle in which an in-wheel motor is provided at each wheel.

The technical features according to the present embodiment are not limited to a battery electric vehicle. The technical features according to the present embodiment are widely applicable to electrified vehicles that use an electric motor as a driving power unit. For example, the technical features according to the present embodiment are applicable to a hybrid electric vehicle (HEV) or a plug-in hybrid electric vehicle (PHEV) with a mode in which the vehicle drives only by the driving force of an electric motor. The technical features according to the present embodiment are also applicable to a fuel cell electric vehicle (FCEV) that supplies an electric motor with electric energy generated by a fuel cell.

**Claims**

1. A battery electric vehicle (100) including an electric motor (2) as a driving source, the battery electric vehicle (100) comprising:

   a driving operation member (22, 24) configured to drive the battery electric vehicle (100);
   a processing circuit (102); and
   a memory (103) storing a database configured to manage a plurality of vehicle models (200) obtained by modelling a plurality of virtual vehicles among which acceleration characteristics for a driving operation of a driver vary, wherein:
   the processing circuit (102) is configured to

      read, from the database, a vehicle model (200) of an intended virtual vehicle selected from among the plurality of virtual vehicles by the driver,
      acquire an operating status of the driving operation member (22, 24) and a driving condition of the battery electric vehicle (100),
      calculate a virtual acceleration of the intended virtual vehicle for an operation to the driving operation member (22, 24) based on the operating status of the driving operation member (22, 24) and the driving condition of the battery electric vehicle (100) by using the vehicle model (200) of the intended virtual vehicle, and control the electric motor (2) such that an acceleration of the battery electric vehicle (100) becomes the virtual acceleration.

2. The battery electric vehicle (100) according to claim 1, wherein the processing circuit (102) is configured to

calculate a target driving force of the battery electric vehicle (100) for adjusting the acceleration of the battery electric vehicle (100) to the virtual acceleration, and
change a motor torque output from the electric motor (2) such that the target driving force is given to the battery electric vehicle (100).

3. The battery electric vehicle (100) according to claim 1 or 2, wherein each of the plurality of vehicle models (200) includes

a control model (210) configured to simulate a control system that calculates a required behavior output of a powertrain of a corresponding one of the virtual vehicles, and
a plant model (220) configured to simulate a physical limitation on the required behavior output of the powertrain of the corresponding one of the virtual vehicles.

4. The battery electric vehicle (100) according to claim 3, wherein the control model (210) is configured to calculate the required behavior output upon receiving input of an operating status of the driving operation member (22, 24) and a driving condition of the battery electric vehicle (100).

5. The battery electric vehicle (100) according to claim 3 or 4, wherein the plant model (220) is configured to output the virtual acceleration of the corresponding one of the virtual vehicles based on a virtual driving force output from the powertrain of the corresponding one of the virtual vehicles for the required behavior output.

6. The battery electric vehicle (100) according to any of claims 1 to 5, wherein:

each of the plurality of vehicle models (200) has one or plurality of parameters relevant to the acceleration characteristics; and
the processing circuit (102) is configured to change the one or plurality of parameters of the vehicle model (200) of the intended virtual vehicle according to the intended virtual vehicle.

7. The battery electric vehicle (100) according to any of claims 1 to 6, further comprising a speaker (21) configured to generate a sound in a vehicle cabin, wherein:

the plurality of virtual vehicles includes a virtual vehicle equipped with an internal combustion engine; and
the processing circuit (102) is further configured to

when the intended virtual vehicle is the virtual vehicle equipped with the internal combustion engine, generate an artificial engine sound from the internal combustion engine by using the vehicle model (200) of the intended virtual vehicle, and
output the artificial engine sound from the speaker (21).

8. The battery electric vehicle (100) according to any one of claims 1 to 7, wherein:

the driving operation member (22, 24) includes an accelerator pedal (22);
the operating status of the driving operation member (22, 24) includes an accelerator operation amount of the accelerator pedal (22); and
the driving condition of the battery electric vehicle (100) includes a vehicle speed of the battery electric vehicle (100).

# FIG. 1

EP 4 556 292 A1

# FIG. 2

FIG. 3

# FIG. 4

CONTROL MODEL (210 / 200)
- ACCELERATOR OPERATION AMOUNT → TARGET VIRTUAL DRIVING FORCE CALCULATION UNIT (211)
- VEHICLE SPEED → REQUIRED BEHAVIOR OUTPUT CALCULATION UNIT (212)

PLANT MODEL (220)
- INTERNAL COMBUSTION ENGINE MODEL (221)
- TRANSMISSION MODEL (222)
- DRIVE SYSTEM MODEL (223)
- VEHICLE AND ENVIRONMENT MODEL (224)

Outputs:
- VIRTUAL ENGINE ROTATION SPEED
- VIRTUAL ENGINE TORQUE
- VIRTUAL ACCELERATION

EP 4 556 292 A1

# FIG. 5

EP 4 556 292 A1

Europäisches
Patentamt

European
Patent Office

Office européen
des brevets

# EUROPEAN SEARCH REPORT

Application Number

EP 24 21 1275

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/322094 A1 (VAN NUS WARREN [US]) 12 October 2023 (2023-10-12) * abstract * * paragraphs [0001] - [0002], [0004] - [0008], [0022] - [0040], [0044] - [0047], [0061] - [0079], [0086] - [0102], [0106] - [0116]; figures 1-12 * | 1-8 | INV. B60L3/12 B60L15/20 B60L58/12 B60W30/188 |
| X | DE 10 2014 015074 B4 (AUDI AG [DE]) 27 July 2017 (2017-07-27) * abstract * * paragraphs [0001] - [0005], [0008] - [0016], [0018] - [0023], [0027] - [0037]; figure 1 * | 1-8 | |
| X | US 2012/106748 A1 (PEACHEY COLIN [GB] ET AL) 3 May 2012 (2012-05-03) * abstract * * paragraphs [0006] - [0008], [0019] - [0034], [0038] - [0041], [0057] - [0059]; figures 1-8 * | 1-8 | |
| X | US 2012/083958 A1 (BALLARD CLAUDIO R [US]) 5 April 2012 (2012-04-05) * abstract * * paragraphs [0007] - [0022], [0024] - [0030], [0049] - [0065], [0071] - [0074]; figures 1-3,7A-10 * | 1-8 | TECHNICAL FIELDS SEARCHED (IPC) B60L B60W F02D |

The present search report has been drawn up for all claims

| Place of search | Date of completion of the search | Examiner |
|---|---|---|
| The Hague | 5 April 2025 | Molnar, Sabinus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

**ANNEX TO THE EUROPEAN SEARCH REPORT
ON EUROPEAN PATENT APPLICATION NO.**

EP 24 21 1275

This annex lists the patent family members relating to the patent documents cited in  the above-mentioned European search report.
The members are as contained in the European Patent Office EDP file on
The European Patent Office is in no way liable for these particulars which are merely given for the purpose of information.

05-04-2025

| Patent document cited in search report | Publication date | Patent family member(s) | | Publication date |
|---|---|---|---|---|
| US 2023322094 A1 | 12-10-2023 | EP | 4496726 A1 | 29-01-2025 |
| | | US | 2023322094 A1 | 12-10-2023 |
| | | WO | 2023183849 A1 | 28-09-2023 |
| DE 102014015074 B4 | 27-07-2017 | NONE | | |
| US 2012106748 A1 | 03-05-2012 | CN | 102714033 A | 03-10-2012 |
| | | EP | 2491547 A1 | 29-08-2012 |
| | | JP | 5778163 B2 | 16-09-2015 |
| | | JP | 2013508782 A | 07-03-2013 |
| | | JP | 2015018214 A | 29-01-2015 |
| | | US | 2012106748 A1 | 03-05-2012 |
| | | US | 2014177866 A1 | 26-06-2014 |
| | | WO | 2011050274 A1 | 28-04-2011 |
| US 2012083958 A1 | 05-04-2012 | US | 2012083958 A1 | 05-04-2012 |
| | | WO | 2012044881 A2 | 05-04-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018166386 A